# DEMANDE DE BREVET EUROPEEN

(11) **EP 4 099 044 A1**
(43) Date de publication de la demande: **07.12.2022**
(21) Numéro de dépôt: 22177076.1
(22) Date de dépôt: 02.06.2022
(51) Int. Cl.: G01S 7/02, G06K 9/00

(54) **METHODE ET DISPOSITIF DE CLASSIFICATION D'IMPULSIONS DE SIGNAUX RADAR**

(30) Priorité: 03.06.2021 FR 2105841
(71) Demandeur: THALES, 92400 Courbevoie (FR)
(72) Inventeur: ENDERLI, Cyrille, 78990 Elancourt (FR); SEUTÉ, Hugo, 78990 Elancourt (FR)
(74) Mandataire: Atout PI Laplace

(57) **Abrégé**

Méthode, mise en œuvre par ordinateur, de classification d'impulsions de signaux radar comprenant les étapes de :
- Recevoir (101) des signaux radar émis par une pluralité d'émetteurs de différents types,
- Numériser (102) les signaux radar reçus pour produire un signal numérisé,
- Détecter et isoler (103) un ensemble d'impulsions à partir du signal numérisé,
- Appliquer (104) un pré-traitement à chaque impulsion pour les rendre indépendantes de modulations intentionnelles,
- Fournir les impulsions en entrée d'un moteur d'apprentissage automatique pour classifier (105) les impulsions en différentes catégories correspondant chacune à un type d'émetteur.

## Description

L'invention concerne le domaine de la classification ou partitionnement de signaux radar en fonction du type d'émetteur du signal. Elle s'applique notamment à l'identification d'émetteur mais aussi au désentrelacement d'impulsions pour regrouper les impulsions reçues en différentes catégories fonction de leur émetteur.

Les problèmes de désentrelacement et d'identification d'impulsions de signaux radar sont généralement traités par des dispositifs exploitant des paramètres macroscopiques mesurés sur le signal reçu. Ces paramètres sont, typiquement : les fréquences d'émissions, les intervalles de temps entre deux impulsions, les durées des impulsions. Dans le cas du désentrelacement, on peut ajouter l'amplitude et l'angle d'arrivée des signaux radars.

Les traitements d'identification et de désentrelacement basés sur ces paramètres peuvent être mis en défaut lorsqu'il existe une ambigüité sur un jeu de paramètres. Par exemple, s'il existe deux émetteurs radar agiles différents, mais partageant, par exemple, la même plage de fréquence ou d'intervalle de répétition des impulsions ; il est difficile de les distinguer et donc de les désentrelacer et identifier chacun des émetteurs. Or les émetteurs radar modernes ont tendance à développer une plus grande agilité de leurs paramètres, et ont donc plus de chances d'être ambigus d'après la mesure de ces paramètres « classiques ».

De nouvelles pistes pour résoudre ce problème sont apportées par les traitements dits d'Identification Spécifique d'Emetteur ou SEI (Specific Emitter Identification). Les algorithmes de ce type ont pour objet de distinguer différents émetteurs, éventuellement issus d'une même série de production, grâce à leurs caractéristiques intrinsèques. Ces caractéristiques correspondent à des mesures réalisées sur le signal. Les spécificités d'un émetteur que l'on cherche à caractériser peuvent être non intentionnelles (par exemple de légères modulations sur l'impulsion liées à des imperfections matérielles).

Les méthodes d'identification dites SEI peuvent être envisagées pour la reconnaissance des émetteurs radars, ou de classes plus générales d'émetteurs telles que les émetteurs à tubes, à état solide etc. Cependant, ces traitements nécessitent l'extraction de caractéristiques à partir du signal émis. La détermination des caractéristiques pertinentes est un travail manuel qui nécessite l'intervention d'un expert. De plus, des procédés dédiés à la mesure robuste de chacune de ces caractéristiques doivent être développés.

Un problème technique à résoudre dans ce contexte consiste donc à développer une méthode de classification ou regroupement d'impulsions radar qui permettent de catégoriser les impulsions en fonction des caractéristiques intrinsèques aux équipements utilisés par l'émetteur.

Les signaux radar sont dans leur très grande majorité des trains d'impulsions plus ou moins périodiques caractérisés par des modulations inter- et/ou intraimpulsions.

Un premier type de méthodes connues pour identifier des émetteurs radars, compte tenu d'éventuelles agilités ou irrégularités, est basé sur les k plus proches voisins [1], les machines à vecteur support [2], ou des combinaisons de méthodes pour diminuer la charge calculatoire [3]. Une autre approche classique consiste à utiliser la logique floue pour ses propriétés de robustesse [4-6].

Les approches de l'état de l'art donnent souvent de bons résultats mais leur complexité croît en général rapidement avec le nombre d'impulsions radar pour l'apprentissage des classifieurs et/ou la reconnaissance de plots inconnus.

Ces méthodes sont conçues pour mesurer les paramètres typiques relatifs aux modulations intentionnelles, relativement faciles à déterminer. Bien que les méthodes citées apportent des solutions pour des cas complexes d'agilité/instabilité, elles ne sont pas en mesure de distinguer deux émetteurs ayant des caractéristiques identiques. Avec le développement de nouveaux systèmes radars de plus en plus agiles sur leurs paramètres et l'augmentation importante de la densité des émissions, les cas d'ambigüité au sens des paramètres classiques sont de plus en plus fréquents. Une solution est alors d'introduire de nouveaux paramètres discriminants plus intrinsèques aux émetteurs.

Une autre approche du problème se base sur la caractérisation des émetteurs spécifiques (Specific Emitter Identification, SEI) où l'on cherche à reconnaître plus précisément la source individuellement (quel modèle, voire quelle copie d'un même type de radar, avec son numéro de série, sa version etc.). Les recherches dans ce domaine fournissent d'intéressantes approches pour exploiter les modulations non intentionnelles sur les impulsions radar émises en extrayant des caractéristiques discriminantes basées sur divers formalismes imposés a priori [7-9]. Toutefois, ces méthodes reposent sur une analyse préalable par un expert technique afin de valider la pertinence de l'introduction de telle ou telle caractéristique dans l'algorithme de classification final. De plus, des traitements dédiés doivent être développés pour mesurer de façon robuste chaque paramètre choisi [10].

On peut encore citer dans l'état de l'art trois références qui cherchent à exploiter les impulsions échantillonnées à haute cadence.

Dans la référence [11] l'enveloppe complexe sur-échantillonnée des impulsions est la seule grandeur utilisée pour leur désentrelacement (clustering), fondé sur le critère du maximum de vraisemblance avec une hypothèse Gaussienne sur les échantillons des signaux émis par un même émetteur. Les résultats présentés sont issus de simulations d'impulsions ayant toutes la même durée et les mêmes modulations intra-pulse, ce qui n'est pas toujours le cas dans la réalité. Le pré-traitement effectué n'est pas décrit mais suggère une étape de démodulation non explicitée. Cette démodulation nécessite une connaissance a priori sur la bande de fréquence employée par l'émetteur, ce dont on ne dispose pas en pratique.

Un problème différent est traité dans la référence [12] qui est celui de la reconnaissance de quatre types de modulations intentionnelles en tant qu'étape intermédiaire à un système de reconnaissance d'émetteur plus global basé sur des paramètres classiques. Elle considère un échantillonnage dépendant de la fréquence porteuse du signal (qu'il faut donc connaitre) et souligne l'importance du pré-traitement. Elle n'adresse pas la reconnaissance des impulsions des émetteurs mais seulement celle du type de modulation intra-impulsion intentionnelle, avec un pré-traitement spécifique basé sur la fonction de corrélation d'échantillons complexes de signal.

Enfin, dans la référence [13], des caractéristiques sont extraites de manière experte sur les impulsions démodulées en amplitude et en fréquence, puis transformées encore par des approches classique d'analyse discriminante et d'analyse en composantes principales.

De façon générale, aucune approche de l'état de l'art ne permet de catégoriser les impulsions radars en fonction des spécificités des émetteurs, notamment des modulations non intentionnelles introduites sur le signal par les composants électroniques propres à chaque émetteur ou type d'émetteur.

L'invention propose de résoudre les limitations des solutions de l'art antérieur en proposant une méthode basée sur une numérisation du signal à très haute fréquence couplée à l'exploitation complète des impulsions numérisées en vue de les classifier en fonction de caractéristiques intrinsèques aux émetteurs qui engendrent des variations ou modulations non intentionnelles sur le signal.

Au contraire des solutions connues, l'invention n'est pas basée sur la prise en compte de caractéristiques particulières de la forme d'onde du signal émis telles que la valeur de la fréquence porteuse, les durées des impulsions ou encore les modulations intra-impulsion, car ces dernières sont sujettes à des variations importantes selon le mode d'émission utilisé par l'émetteur.

L'invention permet d'identifier, dès la première impulsion reçue, le type d'émetteur. Elle permet également une aide au processus de désentrelacement pour différencier des impulsions reçues simultanément de différents émetteurs.

Pour cela, l'invention se base sur une numérisation à très haute fréquence permettant d'échantillonner finement les impulsions radar, d'un pré-traitement adapté pour rendre toutes les impulsions comparables entre elles et d'un algorithme d'apprentissage automatique permettant de regrouper les impulsions par catégorie et éventuellement d'identifier l'émetteur associé.

L'invention a ainsi pour objet une méthode, mise en œuvre par ordinateur, de classification d'impulsions de signaux radar comprenant les étapes de :
- Recevoir des signaux radar émis par une pluralité d'émetteurs de différents types,
- Numériser les signaux radar reçus pour produire un signal numérisé,
- Détecter et isoler un ensemble d'impulsions à partir du signal numérisé,
- Appliquer un pré-traitement à chaque impulsion pour les rendre indépendantes de modulations intentionnelles,
- Fournir les impulsions en entrée d'un moteur d'apprentissage automatique pour classifier les impulsions en différentes catégories correspondant chacune à un type d'émetteur.

Selon un aspect particulier de l'invention, le moteur d'apprentissage automatique est un moteur d'apprentissage supervisé et est préalablement entrainé au moyen de données d'apprentissage constituées d'un ensemble d'impulsions radar, chaque impulsion étant associée à un type d'émetteur parmi une pluralité d'émetteurs de différents types.

Selon un aspect particulier de l'invention, le moteur d'apprentissage supervisé est réalisé au moyen d'un réseau neuronal ayant une couche d'entrée recevant sur chaque neurone un échantillon temporel d'une impulsion et une couche de sortie dont les neurones correspondent aux catégories d'émetteurs.

Selon un aspect particulier de l'invention, le réseau neuronal est un perceptron multi-couches ayant au moins une couche cachée.

Selon un aspect particulier de l'invention, le moteur d'apprentissage automatique est un moteur d'apprentissage non supervisé.

Selon un aspect particulier de l'invention, l'étape de pré-traitement comprend les sous-étapes de :
- Extraire l'enveloppe des impulsions de sorte à éliminer la dépendance à la fréquence de modulation des signaux,
- Normaliser les impulsions en amplitude,
- Aligner temporellement les impulsions

Selon un aspect particulier de l'invention, l'étape d'extraire l'enveloppe des impulsions est réalisée au moyen d'une transformée de Hilbert.

Selon un aspect particulier de l'invention, l'étape de pré-traitement comprend en outre une étape de filtrage passe-bas.

Selon un aspect particulier de l'invention, la numérisation des signaux radar est réalisée à une fréquence supérieure à la fréquence porteuse maximale des signaux radar.

L'invention a aussi pour objet un dispositif de classification d'impulsions de signaux radar comprenant un récepteur pour recevoir des signaux radar émis par une pluralité d'émetteurs de différents types et numériser les signaux radar reçus pour produire un signal numérisé et un processeur, le dispositif étant configuré pour exécuter les étapes de la méthode de classification d'impulsions de signaux radar selon l'invention.

D'autres caractéristiques et avantages de la présente invention apparaîtront mieux à la lecture de la description qui suit en relation aux dessins annexés suivants.
[Fig. 1] représente un organigramme des étapes principales de mise en œuvre d'une méthode de classification d'impulsions radar selon un mode de réalisation de l'invention,
[Fig. 2] représente une illustration d'une étape d'extraction d'enveloppe d'une impulsion,
[Fig. 3] représente une illustration d'une étape de filtrage passe bas appliquée à une impulsion,
[Fig. 4] représente une illustration d'une étape de normalisation d'amplitude d'une impulsion
[Fig. 5] représente une illustration d'une étape d'alignement temporel d'impulsions,
[Fig. 6] représente un exemple de réseau neuronal utilisé pour classifier les impulsions,
[Fig. 7] représente un schéma d'un dispositif configuré pour mettre en œuvre l'invention.

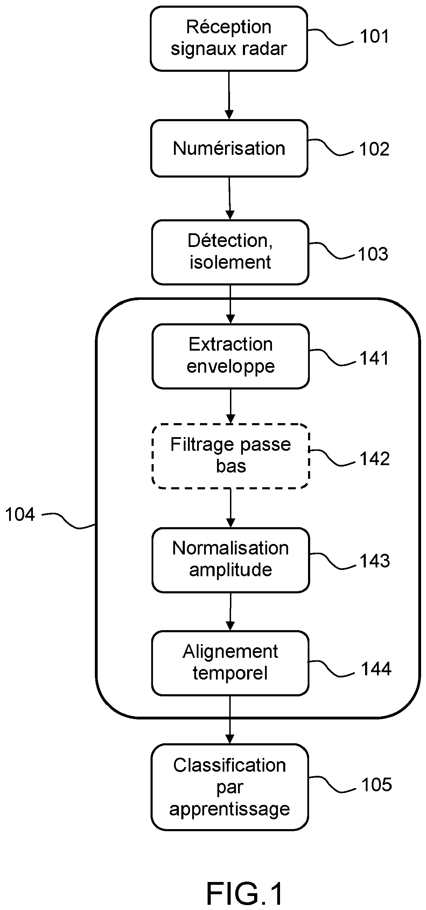

La figure 1 schématise, sur un organigramme, les étapes de mise en œuvre d'une méthode de classification d'impulsions radar selon un mode de réalisation de l'invention.

La méthode est mise en œuvre au moyen d'un dispositif comprenant au moins un récepteur de signaux radar et un processeur configuré pour mettre en œuvre les étapes de traitement 102 à 105.

Dans une première étape 101, les signaux radar sont acquis par le récepteur. Ces signaux proviennent de différents émetteurs radars et sont émis avec des formes d'ondes mais aussi des modulations non intentionnelles différentes.

A l'étape 102, le signal reçu est numérisé à très haute fréquence, c'est-à-dire avec une fréquence d'échantillonnage supérieure à la fréquence porteuse maximale des signaux émis, éventuellement ramenée sur fréquence intermédiaire dans le cas d'un récepteur supérhétérodyne.

A l'étape 103, les impulsions des signaux radars sont détectées et isolées. Les impulsions sont détectées de sorte à isoler chaque front montant d'impulsion avec un intervalle de garde prédéterminé avant et après le front montant. L'étape 103 de séparation des impulsions est, par exemple, réalisée au moyen d'un seuil de détection en amplitude. Autrement dit, à chaque fois que le signal dépasse un seuil prédéterminé, on détecte une impulsion qui est ensuite extraite au moyen d'un fenêtrage temporel du signal autour du point de dépassement du seuil. Toutes les impulsions détectées sont sauvegardées dans une mémoire.

L'étape 104 consiste ensuite à réaliser un ensemble de pré-traitements des impulsions détectées afin de les rendre indépendantes des modulations intentionnelles temporelles et/ou spectrales et aussi de les rendre comparables.

Une première sous étape 141 consiste à extraire l'enveloppe de chaque impulsion de sorte à rendre le procédé invariant en fréquence. En effet, les différents signaux radar peuvent être émis avec des fréquences porteuses différentes, il est donc nécessaire de s'affranchir de la fréquence porteuse pour pouvoir identifier le type d'émetteur même lorsqu'il utilise une fréquence porteuse qui n'est pas connue.

Une méthode possible pour extraire l'enveloppe d'une impulsion consiste à appliquer à l'impulsion une transformée de Hilbert qui permet d'obtenir un signal analytique complexe à partir de signaux réels numérisés.

En calculant le module du signal analytique transformé, on obtient l'enveloppe de l'impulsion.

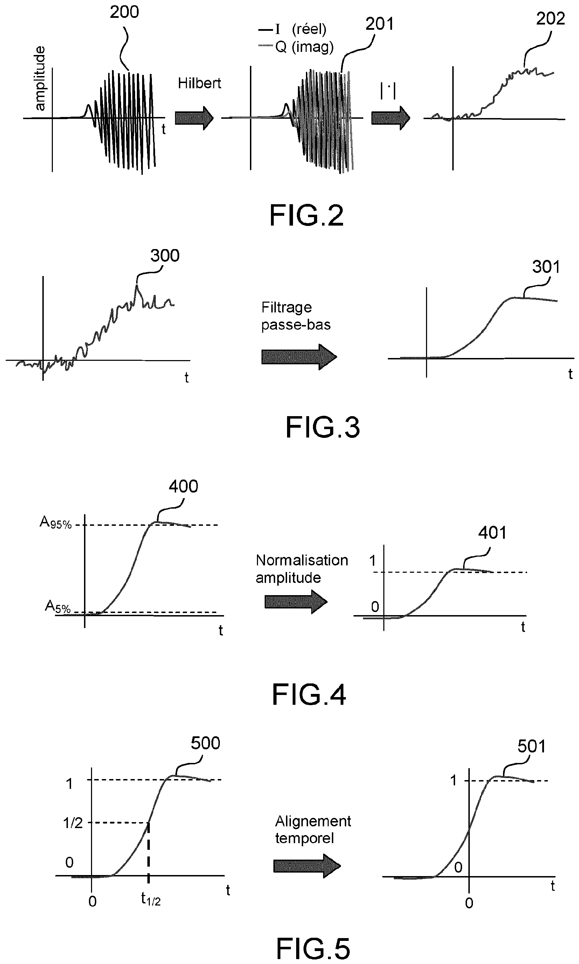

La figure 2 schématise cette étape 141 sur un exemple d'impulsion 200. La figure 201 montre le signal analytique transformé composé d'un signal réel I et d'un signal imaginaire Q. La figure 202 montre le module du signal 201 qui donne l'enveloppe de l'impulsion.

Dans un mode de réalisation particulier de l'invention, une étape optionnelle 142 de filtrage passe-bas est appliquée à l'enveloppe de l'impulsion afin de filtrer les hautes fréquences résiduelles qui sont dues au bruit. La fréquence de coupure du filtre passe bas est choisie de sorte à optimiser le rapport signal à bruit après filtrage.

La figure 3 montre un exemple d'enveloppe d'une impulsion bruitée 300 et le résultat 301 du filtrage passe-bas appliqué à cette enveloppe.

Sans sortir du cadre de l'invention, l'étape de filtrage passe bas 143 peut être exécutée avant l'étape de détection d'impulsions 103.

Afin de réduire la taille des données d'entrée pour les étapes suivantes, dans un mode de réalisation particulier, une étape optionnelle de décimation du signal filtré est appliquée.

A l'étape 143, on applique ensuite une étape de normalisation de l'amplitude des échantillons. Cette transformation permet de rendre la méthode invariante en amplitude. En effet, les impulsions provenant d'un même émetteur radar peuvent être reçues avec des amplitudes différentes selon la distance entre l'émetteur et le récepteur mais aussi la position de l'impulsion dans le lobe de réception de l'antenne. Il est donc nécessaire de pouvoir reconnaitre une impulsion quelle que soit son amplitude en réception.

Un exemple de normalisation possible consiste à mesurer le 5^{ème} quantile de l'amplitude qui correspond au plancher de bruit et le 95^{ème} quantile de l'amplitude qui représente l'amplitude de l'impulsion. Ensuite, on normalise ces deux valeurs respectivement à 0 et à 1.

Le choix d'utiliser des statistiques ordonnées permet d'être insensible à la présence de quelques valeurs aberrantes en amplitude.

Plus généralement, les seuils de sélection des amplitudes mises à 0 et à 1 respectivement peuvent être choisies dans les plages de quantile suivantes : entre le 2^{ème} et le 10^{ème} quantile pour l'amplitude correspondant à 0 et entre le 90^{ème} et le 98^{ème} quantile pour l'amplitude correspondant à 1.

L'étape de normalisation permet d'éliminer des valeurs aberrantes trop faibles ou trop élevées qui ne permettent pas de caractériser précisément l'impulsion.

L'étape 143 est illustrée à la figure 4 qui représente l'impulsion d'origine 400 et l'impulsion après normalisation 401.

L'étape 144 suivante consiste à aligner finement les impulsions dans un même référentiel temporel. Cette étape est, par exemple, réalisée en prenant une référence temporelle particulière, par exemple l'instant où l'amplitude du front montant de l'impulsion est égale à 0.5 après normalisation. D'autres références temporelles peuvent être choisies pour réaliser cet alignement temporel, par exemple l'instant où l'amplitude du front montant est égale à 0,25 ou 0,75 ou toute valeur comprise entre 0,25 et 0,75. La valeur 0,5 présente l'avantage de constituer le point le plus stable de l'impulsion, quelle que soit la pente de son front montant.

La figure 5 illustre l'étape 144 avec la représentation 500 de l'impulsion avant alignement et la représentation 501 de l'impulsion après alignement où l'on a opéré un décalage temporel de t_{1/2} de l'impulsion, avec t_{1/2} la référence temporelle utilisée. Après décalage, l'amplitude de l'impulsion au point de référence est mise à l'abscisse 0 mais une autre valeur d'abscisse (commune à toutes les impulsions) peut être choisie dans la mesure où toutes les impulsions sont centrées sur le même point de référence.

A l'issue de l'étape 104 de pré-traitement, on obtient un ensemble d'impulsions qui sont indépendantes des modulations intentionnelles et qui peuvent être comparées en vue d'être classifiées.

Les différentes étapes de pré-traitement précitées peuvent être mises en œuvre intégralement ou partiellement. Autrement dit, chaque étape peut être exécutée seule ou en combinaison avec les autres étapes.

On applique alors une étape 105 de classification des impulsions au moyen d'un moteur d'apprentissage supervisé.

Le moteur d'apprentissage supervisé est, au préalable, entrainé à classifier les impulsions en différentes catégories, chaque catégorie correspondant à un type d'émetteur. Un émetteur est caractérisé par des caractéristiques intrinsèques qui dépendent du matériel utilisé et notamment des chaines de composants utilisés pour générer et mettre en forme le signal avant de l'émettre.

Une caractéristique propre à un type d'émetteur est sa technologie d'émission qui peut être une technologie à tube hyperfréquence ou une technologie à état solide, par exemple.

Les données d'apprentissage utilisées sont des impulsions radar émises par différents types d'émetteur radars et auxquelles les étapes 101 à 104 ont été appliquées.

Dans un mode de réalisation, les données d'apprentissage sont obtenues au moyen de tests réalisés avec différents émetteurs radars émettant divers signaux radars présentant des formes d'ondes différentes. Les signaux radars sont émis dans des caissons absorbants ou sur charge ou en espace libre dans un environnement dans lequel des émetteurs d'intérêt sont présents.

Les signaux de test ainsi mesurés peuvent être rassemblés pour former un groupe de données d'apprentissage et un groupe de données de validation sur lequel le moteur d'apprentissage entrainé est validé.

Les signaux radars sont fournis en entrée du moteur d'apprentissage sous la forme d'un vecteur d'échantillons temporels de taille prédéfinie, par exemple de l'ordre de plusieurs centaines d'échantillons.

De manière générale, la taille du vecteur d'entrée dépend de la durée d'analyse des signaux et des capacités de numérisation de l'équipement utilisé.

Dans un mode de réalisation de l'invention, le moteur d'apprentissage supervisé est un réseau neuronal de type perceptron multi-couches comprenant une couche cachée à quatre neurones. Par exemple, la fonction de cout utilisée pour l'apprentissage est une fonction d'entropie croisée. Le réseau neuronal reçoit en entrée un vecteur composé des échantillons temporels d'une impulsion. La couche d'entrée du réseau comporte donc autant de neurones que d'échantillons. La couche de sortie comporte autant de neurones que de classes d'émetteurs. Elle implémente une fonction d'activation de type softmax. La couche cachée implémente une fonction d'activation de type ReLu. La métrique optimisée lors de l'apprentissage est, par exemple une entropie croisée. La classe d'émetteur choisie par le réseau neuronal correspond au neurone de sortie pour lequel la valeur de sortie de la fonction d'activation est la plus élevée.

De manière générale, la topologie et les paramètres du moteur d'apprentissage utilisé dépendent du nombre de signaux radars différents à identifier et des capacités de numérisation de l'équipement utilisé.

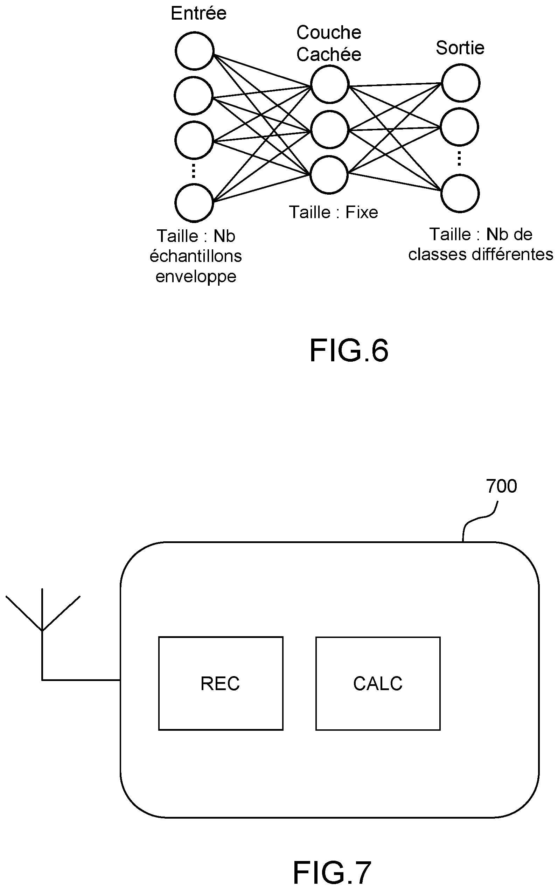

La figure 6 illustre le réseau neuronal utilisé dans cet exemple.

Les performances du réseau neuronal entrainé sont, par exemples, validées lors d'une phase de validation pendant laquelle on fournit en entrée du réseau neuronal des impulsions associées à des types d'émetteurs non utilisés lors de la phase d'apprentissage.

Sans sortir du cadre de l'invention, d'autres types de réseaux neuronaux basés sur des paramètres différents peuvent être envisagés. Notamment, les paramètres choisis sont le nombre et la taille des couches cachées du réseau, les fonctions d'activation utilisées et la métrique optimisée. Le réseau neuronal peut être remplacé par tout type d'algorithme d'apprentissage supervisé, par exemple un algorithme de type machine à vecteurs supports (Support Vector Machine, SVM).

Dans un autre mode de réalisation de l'invention, l'invention est appliquée pour désentrelacer des impulsions émises par différents émetteurs afin de les regrouper en différentes catégories, sans forcément identifier l'émetteur. Dans ce cas, le réseau neuronal est remplacé par un algorithme d'apprentissage non supervisé pour réaliser un partitionnement ou « clustering » en anglais des impulsions en différentes catégories. Par exemple, l'algorithme d'apprentissage non supervisé peut être du type analyse en composantes principales ou analyse par K-moyennes. Un algorithme d'apprentissage non supervisé ne nécessite pas d'entrainement et donc pas de données d'apprentissage. Dans ce mode de réalisation, il n'est pas nécessaire d'identifier l'émetteur.

L'invention peut être mise en œuvre en tant que programme d'ordinateur comportant des instructions pour son exécution. Le programme d'ordinateur peut être enregistré sur un support d'enregistrement lisible par un processeur.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en œuvre des aspects des techniques décrites ici. Les moyens ou ressources informatiques peuvent notamment être distribués ("*Cloud computing*"), éventuellement selon des technologies de pair-à-pair. Le code logiciel peut être exécuté sur n'importe quel processeur approprié (par exemple, un microprocesseur) ou cœur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en œuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

Alternativement, l'invention peut aussi être mise en œuvre au moyen d'un processeur qui peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »). Chaque nœud du réseau maillé ainsi que l'équipement externe associé au nœud racine peut utiliser, pour mettre en œuvre l'invention, un ou plusieurs circuits électroniques dédiés ou un circuit à usage général. La technique de l'invention peut se réaliser sur une machine de calcul reprogrammable (un processeur ou un micro-contrôleur par exemple) exécutant un programme comprenant une séquence d'instructions, ou sur une machine de calcul dédiée (par exemple un ensemble de portes logiques comme un FPGA ou un ASIC, ou tout autre module matériel).

La figure 7 représente un schéma d'un dispositif 700 apte à mettre en œuvre l'invention. Un tel dispositif 700 comporte au moins un récepteur REC de signaux radar pour acquérir et numériser des impulsions de signaux radar et un calculateur CALC configuré pour exécuter les étapes 103,104,105 de l'invention aboutissant à la classification des impulsions reçues afin d'identifier le type d'émetteur du signal.

### Références

[1] E. Granger et al., "Comparison of Classifiers for Radar Emitter Type Identification", C.H. Dagli et al. Eds., Intelligent Engineering Systems Through Artificial Neural Networks, vol.9, pp.3-11, New York, USA, 1999.
[2] L. Li, H. Ji, "Combining Mltiple SVM Classifiers for Radar Emitter Récognition", Proc. 6th International Conférence on Fuzzy Systems and Knowledge Discovery, p.140-144, Yantai, China, 16-16 Aug. 2010.
[3] Z. Yang et al., "Hybrid Radar Emitter Recognition Based on Rough k-Means Classifier and Relevance Vector Machine", Sensors, vol.13, pp.848-864, 2013.
[4] S.A. Hassan et al., "Emitter Recognition using Fuzzy Inference System", IEEE International Conférence on Emerging Technologies, pp.204-208, Islamabad, Pakistan, 17-18 Sept. 2005.
[5] Y.M. Chen et al., "Identification of Highly Jittered Radar Emitters Signais based on Fuzzy Classification", IOSR Journal of Engineering, vol.3, no.10, pp.53-59, Oct. 2013.
[6] Y.M. Chen et al., "Emitter Identification of Electronic Intelligence
[7] J. Dudczyk, A. Kawalec, "Fractal Features of Specific Emitter Identification", Acta Physica Polonica series A, vol.124, no.3, pp.406-409, Oct. 2013.
[8] A. Aubry et al., "Cumulants-Based Radar Specific Emitter Identification", IEEE International Workshop on Information Forensics and Security, pp.1-6, Foz do Iguaçu, Brazil, 29 Nov.-2 Dec. 2011.
[9] T. Han, Y. Zhou, "Intuitive Systemic Models and Intrinsic Features for Radar-Specific Emitter Identification", F. Sun et al. (eds), Foundations and Practical Applications of Cognitive Systems and Information Processing, Advances in Intelligent Systems and Computing 215, pp.153-160, Springer-Verlag, Berlin/Heidelberg, Germany, 2014.
[10] K. I. Talbot et al., "Specific emitter identification and vérification", Technology Review, vol. 113, 2003.
[11] J. Liu et al., "Online Clustering Algorithms for Radar Emitter Classification", IEEE Trans. Patt. Anal. Machine Intell., vol.27, no.8, Aug. 2005.
[12] J. Perdoch et al., "ELINT Objects Identification Based on Intra-Pulse Modulation Classification", NATO Science & Technology Organization Meeting Proceedings STO-MP-IST-160, Bordeaux, France, 30th May-1st June 2018.
[13] A. Kawalec, R. Owczarek, "Radar Emitter Recognition Using Intrapulse Data", 15th Int. Conf. Microwaves, Radar and Wireless Comm., Warsaw, Poland, 17-19 May 2004.

## Revendications

1. Méthode, mise en œuvre par ordinateur, de classification ou de partitionnement d'impulsions de signaux radar comprenant les étapes de :
- Recevoir (101) des signaux radar émis par une pluralité d'émetteurs de différents types,
- Numériser (102) les signaux radar reçus pour produire un signal numérisé,
- Détecter et isoler (103) un ensemble d'impulsions à partir du signal numérisé,
- Appliquer (104) un pré-traitement à chaque impulsion pour les rendre indépendantes de modulations intentionnelles,
- Fournir les impulsions en entrée d'un moteur d'apprentissage automatique pour classifier (105) ou partitionner les impulsions en différentes catégories correspondant chacune à un type d'émetteur.

2. Méthode de classification d'impulsions de signaux radar selon la revendication 1 dans laquelle le moteur d'apprentissage automatique est un moteur d'apprentissage supervisé et est préalablement entrainé au moyen de données d'apprentissage constituées d'un ensemble d'impulsions radar, chaque impulsion étant associée à un type d'émetteur parmi une pluralité d'émetteurs de différents types.

3. Méthode de classification d'impulsions de signaux radar selon la revendication 2 dans laquelle le moteur d'apprentissage supervisé (105) est réalisé au moyen d'un réseau neuronal ayant une couche d'entrée recevant sur chaque neurone un échantillon temporel d'une impulsion et une couche de sortie dont les neurones correspondent aux catégories d'émetteurs.

4. Méthode de classification d'impulsions de signaux radar selon la revendication 3 dans laquelle le réseau neuronal est un perceptron multi-couches ayant au moins une couche cachée.

5. Méthode de classification d'impulsions de signaux radar selon la revendication 1 dans laquelle le moteur d'apprentissage automatique est un moteur d'apprentissage non supervisé.

6. Méthode de classification d'impulsions de signaux radar selon l'une quelconque des revendications précédentes dans laquelle l'étape de pré-traitement (104) comprend les sous-étapes de :
- Extraire (141) l'enveloppe des impulsions de sorte à éliminer la dépendance à la fréquence de modulation des signaux,
- Normaliser (143) les impulsions en amplitude,
- Aligner (144) temporellement les impulsions

7. Méthode de classification d'impulsions de signaux radar selon la revendication 6 dans laquelle l'étape d'extraire (141) l'enveloppe des impulsions est réalisée au moyen d'une transformée de Hilbert.

8. Méthode de classification d'impulsions de signaux radar selon l'une quelconque des revendications 6 ou 7 dans laquelle l'étape de pré-traitement (104) comprend en outre une étape de filtrage passe-bas (142).

9. Méthode de classification d'impulsions de signaux radar selon l'une quelconque des revendications précédentes dans laquelle la numérisation (102) des signaux radar est réalisée à une fréquence supérieure à la fréquence porteuse maximale des signaux radar.

10. Dispositif de classification d'impulsions de signaux radar comprenant un récepteur (REC) pour recevoir des signaux radar émis par une pluralité d'émetteurs de différents types et numériser les signaux radar reçus pour produire un signal numérisé et un processeur (CALC), le dispositif étant configuré pour exécuter les étapes de la méthode de classification d'impulsions de signaux radar selon l'une quelconque des revendications précédentes.
